# FASCICULE DE BREVET EUROPEEN

(11) **EP 0 408 638 B1**
(45) Date de publication et mention de la délivrance du brevet: **14.12.1994**
(21) Numéro de dépôt: 89904577.7
(22) Date de dépôt: 07.04.1989
(51) Int. Cl.: B65G 1/04

(54) **PROCEDE ET DISPOSITIF D'ACCUMULATION ET DE CONVOYAGE D'ARTICLES POUR PRESENTER CES ARTICLES A UN POSTE FIXE DANS UN ORDRE ARBITRAIRE DETERMINE**
VERFAHREN UND VORRICHTUNG ZUM LAGERN UND FÖRDERN VON GEGENSTÄNDEN, UM DIESELBEN AN EINE ORTSFESTE STATION IN EINER BESTIMMTEN WILLKÜRLICHEN REIHENFOLGE ANZUBIETEN
PROCESS AND DEVICE FOR STORING AND CONVEYING ARTICLES AND PRESENTING THEM AT A FIXED STATION IN A GIVEN ARBITRARY ORDER

(30) Priorité: 08.04.1988 FR 8804690
(43) Date de publication de la demande: 23.01.1991
(73) Titulaire: JUGE, Bernard, F-93500 Pantin (FR); LEROI, Christian, F-93212 La Plaine-Saint-Denis (FR)
(72) Inventeur: JUGE, Bernard, F-93500 Pantin (FR); LEROI, Christian, F-93212 La Plaine-Saint-Denis (FR)
(74) Mandataire: Robert, Jean-Pierre
(86) Numéro de dépôt international: FR8900161
(87) Numéro de publication internationale: WO8909737

(56) Documents cités:
- WO-A-80/00690
- CH-A- 434 118
- US-A- 4 088 237
- Patent Abstracts of Japan, vol.7, no. 25 (M-190)(1170), 2 février 1983, page 63 M 190

## Description

L'introduction de l'informatique dans la gestion des processus de production, de manutention, de convoyage, d'accumulation, de tri..., a autorisé des cycles de fabrication beaucoup plus flexibles, permettant de suivre de très près la demande en optimisant le déroulement des opérations successives d'une chaîne d'opérations.

L'invention se rapporte à un procédé et à un dispositif d'accumulation et de convoyage d'articles selon les preambules des revendications 1 et 5 (WO 80/00690).

Selon la nature de l'installation et sa fonction, la demande exprimée au poste fixe se traduit par une action spécifique de l'opérateur.

Ainsi, si l'installation est destinée à la préparation de commandes dans le magasin de stockage des produits d'une société manufacturière, la demande correspondra à l'affichage au poste fixe des lignes successives des commandes qui doivent être satisfaites, ces lignes successives se présentant dans un ordre arbitraire mais connu par un outil informatique de traitement, suffisamment à l'avance pour que les produits à prélever successivement par l'opérateur soient présents au poste fixe au moment de l'affichage de la ligne de commande à éxécuter.

L'installation peut également servir à présenter à un opérateur, une série d'articles ou pièces sur chacune desquelles il doit réaliser une opération, l'ordre de présentation étant dicté par une demander résultant d'une gamme de traitement (montage par exemple), dont l'arbitraire serait la conséquence de la multiplicité des pièces à monter à ce poste, et de l'aléa de l'ordre dans lequel ces montages seraient à effectuer (dépendant quant à lui de l'ordonnancement de la production générale de l'entreprise).

L'installation peut aussi servir à la réalisation d'opérations de tri ou de groupage d'articles qui parviennent dans un ordre arbitraire au poste fixe, pour être déposés dans des réceptacles appropriés, amenés au poste fixe dans l'ordre correspondant à l'arrivée des articles.

On voit donc que ce poste fixe peut être un poste quelconque d'une chaîne de fabrication, d'assemblage, d'expédition, de tri... On prendra dans ce qui suit l'exemple d'un poste fixe de préparation de commandes, dont le traitement, du point de vue de la lecture et de l'acquisition des données relatives à la demande, est réalisé par ordinateur.

Il existe actuellement plusieurs types d'ateliers de préparation de commandes. Certains d'entre eux comportent un poste fixe, auquel arrive l'énoncé de la commande, qui est lu par le préparateur, ce dernier allant ensuite dans les divers rayonnages de l'entrepôt ou de l'atelier, pour prendre les articles constitutifs de la commande. Les rayonnages, dont l'emplacement est organisé en fonction de leur fréquentation, peuvent être partiellement automatisés, de manière à présenter les casiers contenant les articles nécessaires à portée du préparateur. Dans d'autres cas, l'atelier comporte des transtockeurs qui permettent de constituer au moins une partie de la commande automatiquement, et d'acheminer cette sous-commande à un poste fixe, où le préparateur peut venir la chercher pour la conditionner, la compléter ou la vérifier. Tous les ateliers de préparation connus exigent le déplacement du préparateur, et on sait que ce dernier passe plus de la moitié de son temps de travail à se déplacer. Ces déplacements sont la source de la plupart des erreurs d'exécution. Il n'est pas simple en effet de mettre en oeuvre dans ce type d'organisation, des moyens de contrôle efficaces.

On citera le document WO-A-80/00690 comme illustrant une installation de stockage et déstockage d'articles qui comporte des emplacements de stockage organisés en rangées de part et d'autre de deux ailes de manutention qui permettent de constituer d'une part un stockage relais pour dégager l'accès à un emplacement déterminé et d'autre part un moyen d'acheminement du produit désiré situé à l'emplacement dégagé. Cette installation distingue nettement la fonction de stockage de la fonction d'acheminement et sa structure ne permet pas d'optimiser le temps de déstockage et d'acheminement au poste de prélèvement d'un produit quelconque dans un processus de déplacement pas à pas.

L'invention entend proposer un procédé et un dispositif qui d'une part permet de supprimer totalement le déplacement des opérateurs, grâce à des moyens d'acheminement des articles à un poste fixe, dans un ordre déterminé par une demande ordonnée de manière aléatoire, comme par exemple un portefeuille de commandes classé dans l'ordre chronologique, ne tenant donc compte ni de la nature des articles, ni de la fréquence de leur demande, tout en optimisant d'une part le nombre des emplacements de stockage et de manutention des articles par rapport au nombre total d'articles et d'autre part le temps d'acheminement de chaque article de son emplacement de stockage au poste de prélèvement dès que sa demande est connue.

A cet effet l'invention a pour premier objet un procédé d'accumulation et de convoyage d'articles pour présenter successivement à un poste fixe ceux de ces articles qui satisfont à une demande ordonnée arbitrairement dans l'ordre de cette demande, consistant à :
- organiser l'ensemble des articles à accumuler et à présenter au poste fixe en au moins une boucle-file d'attente comportant:
   - une ligne amont où sont prévus un emplacement constituant le poste fixe, et une file d'emplacements pour l'acheminement pas à pas des articles vers le poste fixe,
   - une ligne aval où sont prévus un emplacement de contrôle adjacent au poste fixe, et une file d'emplacements adjacente à la file d'acheminement, pour le recyclage des articles, comportant le même nombre d'emplacements que la file d'acheminement et issue du poste de contrôle
      en réservant au moins un emplacement libre sur la ligne amont, y compris le poste fixe, et au moins deux emplacements libres sur la ligne aval, y compris le poste de contrôle, et
- connaître en permanence, au moyen d'une unité de traitement de données, la fraction de la demande ordonnée portant sur un nombre d'articles différents égal à la totalité des emplacements de la file d'acheminement, et agencer les articles dans la file d'acheminement, dans l'ordre de la fraction de demande connue, de manière continue, pas à pas, au moyen de ladite unité centrale associée à des moyens de transfert des articles d'un emplacement à un emplacement adjacent, de manière qu'à la fin de chaque pas, le poste fixe soit adjacent à un emplacement laissé libre de la file d'acheminement et que le poste de contrôle ainsi qu'un emplacement de la ligne de recyclage soient libres.

Dans ce procédé, chaque pas d'amenée et de traitement d'un article au poste fixe comporte trois étapes:
- un transfert de la position d'attente de l'article dans l'emplacement libre en amont du poste fixe,
- un transfert de l'article depuis cet emplacement vers le poste fixe,
- un temps de stationnement permettant le traitement de l'article par l'opérateur.

Afin de permettre un recyclage rapide de l'article dans la ligne amont, la position d'attente de l'article est constituée par l'avant-dernier emplacement de la file d'acheminement, ou par le premier emplacement de la file de recyclage.

Le second objet de l'invention est un dispositif pour mettre en oeuvre le procédé ci-dessus comprenant un bâti présentant une pluralité d'emplacements pour recevoir les articles et des moyens de transfert pour agir sur les articles, dans lequel la totalité des emplacements sont arrangés en au moins une boucle-file d'attente comportant une ligne amont et une ligne aval d'égales longueurs terminées respectivement par un poste fixe et un poste de contrôle, les moyens de transfert comportant des moyens de déplacement unidirectionnel pas à pas des articles de chaque emplacement de la boucle vers l'emplacement adjacent aval et de chaque emplacement de la file comprenant le poste de contrôle vers un emplacement de la file comprenant le poste fixe.

Chaque article est constitué par un support mobile pour un nombre préétabli de pièces identifiées.

Le poste fixe étant un poste de prélèvement, le poste de contrôle comprend un organe de détection du nombre de pièces prélevées.

En outre, le dispositif comporte un moyen d'évacuation de chaque support mobile vide hors de la boucle au niveau du poste de contrôle, et un moyen d'introduction dans la boucle d'un support rempli, à l'emplacement de la file de recyclage, adjacent au poste de contrôle, un emplacement supplémentaire de la file de recyclage étant maintenu vide à la fin de chaque opération de prélèvement, en aval de l'emplacement d'introduction.

Enfin, le dispositif comporte au moins une boucle-file d'attente complémentaire dont la ligne amont comporte :
- une file d'acheminement adjacente à la file aval de la boucle principale, se terminant par un emplacement équipé de moyens de transfert de l'article vers l'emplacement adjacent de la file aval de la boucle principale,
- et un emplacement d'accueil d'un article en provenance de l'emplacement adjacent de la ligne aval de la boucle principale équipé de moyens de transfert correspondants, l'emplacement d'accueil comportant également des moyens de transfert en direction de la ligne aval de la boucle complémentaire
   et dont ladite ligne aval comporte :
- une file de recyclage adjacente à la file d'acheminement,
- et un emplacement d'extrémité adjacent à l'emplacement d'accueil, équipé de moyens de transfert de l'article vers un emplacement d'accueil d'une seconde boucle complémentaire adjacente, ou vers le premier emplacement de la file de recyclage.

L'invention sera mieux comprise au cours de la description donnée ci-après à titre d'exemple purement indicatif et non limitatif, qui permettra d'en dégager les avantages et les caractéristiques secondaires.

Il sera fait référence aux dessins annexés, dans lesquels :
- la figure 1 est un schéma de la boucle-file d'attente mise en oeuvre dans la présente invention.
- la figure 2 est une variante de réalisation de la figure 1, permettant l'entrée et la sortie de conteneurs vides et pleins dans la boucle.
- la figure 3 montre l'association d'une boucle-file d'attente principale avec une boucle-file d'attente complémentaire,
- la figure 4 montre les transformations possibles d'une installation conforme à l'invention,
- la figure 5 est une vue schématique d'une installation complexe réalisable conformément à l'invention.

En préambule à cette description, pour fixer la terminologie, on notera que chaque boucle-file d'attente, qu'elle soit principale ou complémentaire comporte une ligne amont et une ligne aval d'un même nombre d'emplacements. Dans la boucle-file d'attente principale, la ligne amont comporte une file d'acheminement et un poste fixe de prélèvement, la ligne aval comporte un poste de contrôle et une file de recyclage. Dans une boucle-file d'attente complémentaire, la ligne amont comporte une file d'acheminement terminée par un emplacement d'extrémité dit emplacement d'accueil, la ligne aval comporte un emplacement de transfert adjacent à l'emplacement d'accueil et une file de recyclage adjacente à la file d'acheminement.

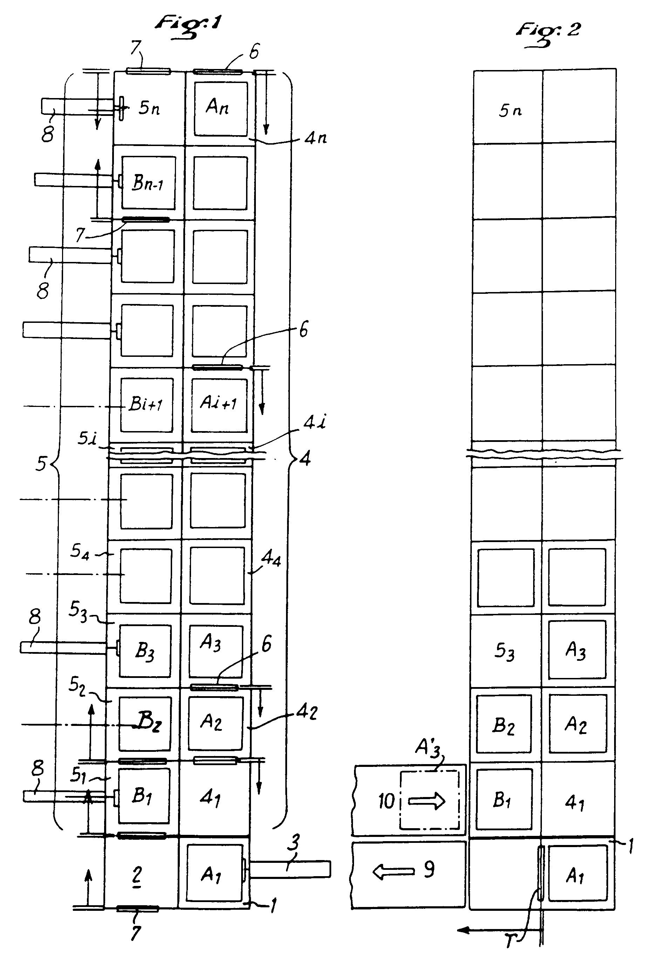

En se reportant tout d'abord à la figure 1, on voit un ensemble de cases que l'on peut séparer en quatre groupes :
- une première case 1 qui représente un emplacement pour un poste fixe de traitement d'un article se trouvant à ce poste,
- une seconde case 2 adjacente à la case 1, qui représente un emplacement pour un poste de contrôle d'un article qui peut y parvenir, en provenance du poste 1, au moyen d'organes de transfert schématisés en 3,
- un alignement 4 de cases 4₁, 4₂, 4₃, ..., 4ᵢ, ..., 4ₙ, formant file d'acheminement, et
- un alignement 5 de cases 5₁, 5₂, 5₃, ..., 5ᵢ, ..., 5ₙ, formant file de recyclage, ces deux alignements étant latéralement adjacents et comptant un même nombre de cases. Ces alignements forment les deux files de la boucle-file d'attente selon l'invention,pour accumuler et acheminer de manière ordonnée des articles au poste fixe 1. Les articles sont notés sur la figure A₁, A₂, A₃, ...., sur la file 4, et B₁, B₂, B₃, ..., sur la file 5.

On a symbolisé par des palettes 6 des moyens de transfert des articles, d'une case à l'autre dans la file 4, et par des palettes 7 des moyens de transfert des articles, d'une case à l'autre dans la file 5. Ces moyens permettent de déplacer les articles, individuellement ou par groupe dans une même file, l'amplitude de la translation étant égale à la dimension d'une case. Ils permettent également de déplacer les articles de la case 4₁ vers le poste 1, et du poste 2 vers la case 5₁. En outre, le dispositif représenté comporte des moyens de transfert des articles de l'une quelconque des case de la file 5 vers la case adjacente de la file 4. Ces moyens sont symbolisés par des poussoirs 8.

Le dispositif possède donc 2n+2 cases, correspondant à 2n+2 emplacements sur un bâti, par exemple horizontal. On peut bien entendu, imaginer un bâti présentant des emplacements dans une autre géométrie (verticale, à plusieurs étages...), avec des moyens appropriés pour assurer les transferts d'un emplacement à l'autre, dans les sens indiqués ci-dessus. Ce dispositif peut recevoir 2n-1 articles, laissant ainsi trois emplacements libres, qui sont situés à des endroits bien définis à la fin de l'opération de traitement de l'article au poste 1. Ces endroits sont les emplacements 2, 5ₙ, et 4₁.

Pour expliquer le principe de fonctionnement du dispositif représenté, on supposera que le poste 1 est un poste de prélèvement de pièces, contenues en vrac dans des bacs qui constituent les articles A₁, A₂, ..., B₃, Bₙ, ...., pour, par exemple, constituer des colis successifs, dont chacun contient les éléments d'une commande.

Le portefeuille de commandes à réaliser est classiquement lu par une machine informatique, au moins jusqu'à avoir inventorié n types de pièces différents (si chacun des bacs ne contient qu'un seul type de pièces ). On peut alors initialiser le dispositif pour, avant de procéder au premier prélèvement, vérifier qu'aucun des n premiers bacs, dans l'ordre de leur apparition dans la fraction lue du portefeuille de commande, n'est distant du poste de prélèvement d'un nombre de pas.inférieur à celui qui sépare un bac devant normalement atteindre le poste de prélèvement avant lui. Le premier bac se trouvera au poste de prélèvement 1, tandis que le n^{ième} pourra se trouver, au plus loin, à l'emplacement 4ₙ, mais aussi dans toute autre position de la file amont ou de la file aval qui n'interdise pas le passage devant lui, de bacs devant atteindre avant lui le poste 1. L'emplacement 4₁ restera libre. Pour procéder automatiquement à cette initialisation, il suffit de faire "tourner" le dispositif pas à pas, de la manière qui sera expliquée ci-après, sans opérer de prélèvements, sachant que le système informatique de commande associé aux moyens de transfert connait, après chaque pas, la position de chacun des bacs dans la boucle-file d'attente. Un algorithme simple permet de réaliser les réarrangements nécessaires à la mise en ordre initiale de la boucle-file d'attente, grâce au cycle de transfert pas à pas selon l'invention.

A la fin de l'initialisation, le poste de contrôle 2 est libre, ainsi que l'emplacement 5ₙ et l'emplacement 4₁. Le premier prélèvement s'effectue dans le bac actif, c'est-à-dire dans le bac A₁ qui se trouve au poste 1 fixe. L'opérateur, à la fin du prélèvement, commande la phase suivante. Cette commande a pour effet d'enclencher le premier de cycle de transfert, dont le déroulement peut comporter quatre variantes, parmi lesquelles l'ordinateur peut choisir en fonction de l'ordre, qu'il connait, des lignes de commande dans le portefeuille.

Dans le premier cas, c'est le bac B₁ qui doit succéder au bac A.₁ Le cycle de transfert s'opère alors de la manière suivante :
- 1^{ère} étape : le bac est A₁ est déplacé sur l'emplacement 2, pendant que le bac B₁ est poussé sur l'emplacement 4₁.
- 2^{ème} étape : le bac B₁ est transféré au poste 1 pendant que le bac A₁ est contrôlé au poste 2; on verra plus loin en quoi consiste ce contrôle.
- 3^{éme} étape : le bac B₁ stationne au poste 1, pendant que le bac A₁ est recyclé dans la file 5 à l'emplacement 5₁.

Dans les trois autres cas, c'est le bac A₂ qui doit succéder au bac A₁ au poste 1.

Dans l'un des cas, le plus simple, le bac B₍ₙ₋₁₎ doit succéder au bac Aₙ.Les étapes sont alors les suivantes :
- 1^{ère} étape : le bac est A₁ est déplacé sur l'emplacement 2 pendant que l'ensemble de la file aval 5 est décalé vers le haut et que l'ensemble de la file amont 4 est décalé vers le bas, libérant la case 4ₙ.
- 2^{ème} étape : le bac A₁ est contrôlé sur l'emplacement 2 tandis que le bac B(n-1) est transféré sur l'emplacement 4ₙ, et que le bac A₂ est transféré au poste fixe 1.
- 3^{ème} étape : le bac A₁ est placé sur l'emplacement 5₁ tandis que le prélèvement s'opère dans le bac A₂ stationnant au poste fixe 1; les autres bacs restent en position d'attente.

Dans un troisième cas, le bac B₃ doit succéder au bac A₃. Le cycle est alors le suivant :
- 1) le bac A₁ passe au poste de contrôle 2, les bacs A₂ et A₃ descendent d'un cran et le bac B₃ reste en attente.
- 2) le bac A₁ reste au poste de contrôle 2 tandis que le bac A₂ descend au poste de prélèvement 1 et le bac B₃ passe derrière le bac A₃ à l'emplacement 4₃ libéré lors de l'étape précédente.
- 3) les bacs A₁, B₁, B₂, sont décalés d'un cran vers le haut, le bac A₂ stationne au poste 1, et les autres bacs sont en attente.

Dans le quatrième cas, enfin, le bac B₃ doit succéder au bac A₄. Le cycle est le suivant:
- 1) le bac A₁ passe au poste 2, les bacs A₂, A₃, A₄, descendent d'un cran tandis que toute la file 5 monte d'un cran.
- 2) le bac A₁ stationne en 2, le bac A₂ passe au poste 1, le bac B₃, alors en 5₄ passe sur l'emplacement 4₄, libéré à l'étape précédente.
- 3) le bac A₁ est décalé d'un cran vers le haut, et les bacs B₍ₙ₋₁₎ à B₄ sont décalés d'un cran vers le bas, le bac A₂ stationne au poste 1 tandis que les autres bacs restent en attente.

On voit qu'avec cet agencement en boucle-file d'attente des bacs contenant les pièces à prélever, on peut satisfaire toute demande arbitrairement ordonnée, pourvu que l'on connaisse en permanence l'ordre dans lequel se présentent les n bacs de pièces différentes, s'il faut (n- 1) cycles de transfert pour amener le produit situé dans la boucle à l'emplacement le plus éloigné du poste de prélèvement à ce poste.

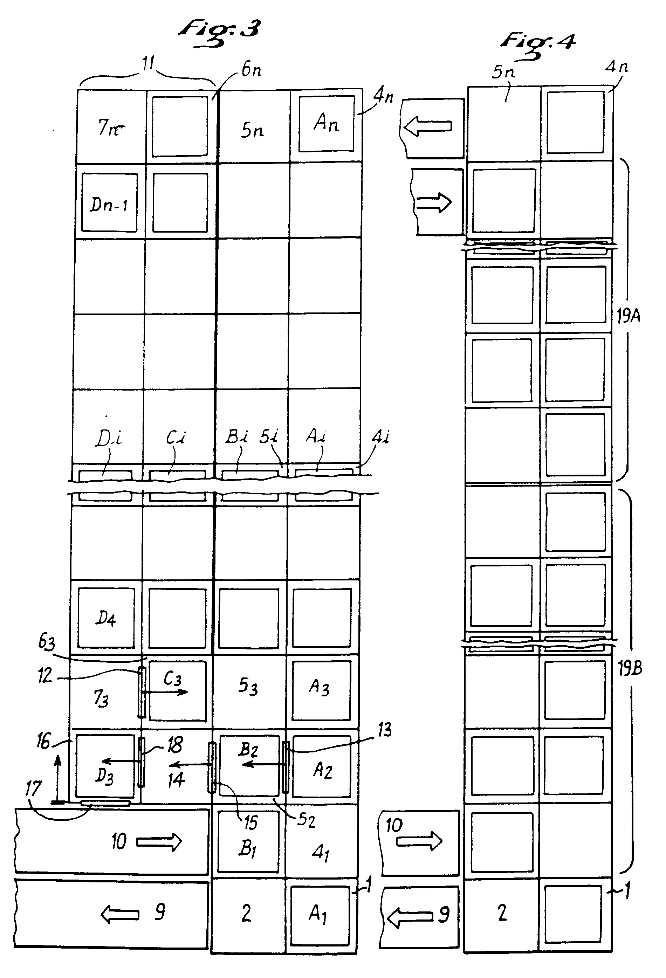

La figure 2 est une variante de réalisation de la figure précédente, dans laquelle il est prévu de pouvoir remplacer un bac qui est vide par un bac plein.

On rapellera que le système informatique qui gère l'installation, connait à tout moment la position de chaque bac, le nombre de pièces dans chaque bac, et, par conséquent, l'instant, compté en cycles, auquel il faudra retirer de la boucle-file d'attente un bac devenu vide, pour le remplacer par un bac plein.

Au poste de contrôle 2, on peut disposer une balance, qui permet d'une part, de contrôler la quantité prélevée par l'opérateur (l'ordinateur connait le poids unitaire de chaque pièce ) et d'autre part, de constater la vacuité du bac et de commander son extraction de la boucle-file d'attente. A cet effet, on a schématisé en T un moyen de transfert permettant de faire passer le bac vide du poste 2 à un dispositif d'évacuation 9. Dans le même temps, un dispositif d'amenée 10 permet d'introduire dans la boucle un bac plein au niveau de l'emplacement 5₁. Pour que cette introduction intervienne à la dernière étape du cycle, et afin que les quatre cas décrits précédemment puissent être réalisés, il faut prévoir de maintenir, à la fin de chaque opération de prélèvement, l'emplacement 5₃ libre. La donnée délivrée par la balance, interprètée par l'unité centrale informatique, peut donner lieu à l'émission d'un signal d'erreur qui interdise la progression des opérations tant que l'erreur n'est pas réparée

Dans le cas où le prélèvement qui a vidé le bac satisfait la demande, le nouveau bac introduit subit le même sort que le bac précédent, s'il n'avait pas été vidé, puisque le bac plein est introduit à la place qu'aurait atteinte le bac précédent.

Dans le cas où la demande n'a pas été satisfaite complètement, l'unité de commande, qui connait l'état de chacun des bacs, anticipera le moment de l'introduction du bac de remplacement de la manière suivante:

On supposera que le bac A₃ n'est pas suffisamment plein pour satisfaire le prélèvement qu'il subira au poste 1. Lors du prélèvement dans le bac A₁, le bac A'₃ (figure 2) est avancé par le dispositif d'amenée 10 au voisinage de l'emplacement 5₁.

A la première étape du premier cycle de transfert, B₁ et B₂ sont remontés d'une case tandis que les bacs de la file d'acheminement descendent ensemble d'une case et que le bac A₁ passe au poste de contrôle 2. L'étape suivante consiste à introduire le bac A'₃ dans la file de recyclage en 5₁, à déplacer les bacs B₂, Bₙ₋₁ d'une case vers le haut, tandis que le bac A₂ est amené au poste fixe 1, A₁ étant controlé en 2. On procède, pendant la troisième étape, au prélèvement dans le bac A₂, B₍ₙ₋₁₎ passant de la file de recyclage dans la file d'acheminement en 4ₙ, A₁, A'₃, B₁ étant remontés d'une case.

A la première étape du second cycle, A₂ passe sur le poste de contrôle et A₃ descend d'une case. Ce mouvement libère un emplacement en regard de A'₃. Au cours de la seconde étape, A₂ est controlé au poste 2, A₃ passe au poste de prélèvement, et A'₃ est inséré dans la file d'acheminement avant A₄. La troisième étape commence par le prélèvement dans A₃, pendant que A₂ et A₁ sont déplacés d'une case vers le haut dans la file de recyclage, grâce à l'emplacement libéré par le transfert de A3 à l'étape précédente.

Pendant la première étape du troisième cycle, A₃ passe au poste de contrôle, B₁-Bₙ₋₂ montent d'un cran dans la file de recyclage, Bₙ₋₁-A'₃ descendant d'un cran dans la file d'acheminement. La deuxième étape permet de controler le contenu du bac A₃ et de constater qu'il est vide, tandis que A'₃ accède au poste de prélèvement. L'étape suivante verra le prélèvement fait dans le bac A'₃ qui contient les mêmes produits que le bac A₃ qui est évacué par le dispositif T sur le transporteur 9 en même temps que le bac B₍ₙ₋₂₎ est transféré de la ligne de recyclage vers la ligne d'acheminement. L'opérateur pourra ainsi compléter la ligne de commande inachevée du fait du manque de produits en quantité suffisante dans le bac A₃.

L'introduction d'un bac dans ces conditions doit donc être prévue avec trois cycles d'avance.

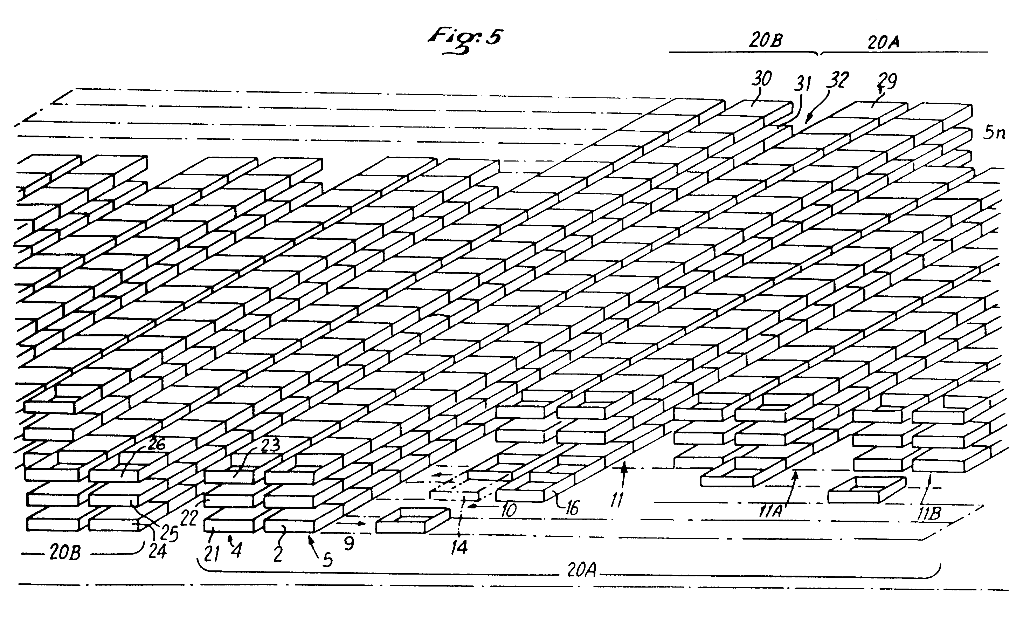

La figure 3 est l'illustration schématique d'une variante de réalisation de la figure 2, grâce à laquelle il est possible de ne pas allonger démesurément la longueur d'une boucle-file d'attente. On retrouve sur cette figure la boucle décrite en regard de la figure 2, avec les mêmes références. A cette boucle est adjointe une boucle complémentaire 11, qui comporte une file amont formée des emplacements 6₃ à 6ₙ, et une file aval comprenant les emplacements 7₃ à 7ₙ. L'emplacement 6₃ est équipé de moyens 12 de transfert, permettant de faire passer un bac vers l'emplacement 5₃ de la file aval de la boucle principale. En outre, l'emplacement 5₂ de la file aval de la boucle principale comporte des moyens de transfert 13 permettant de faire passer un bac vers un emplacement 14, situé juste sous la file amont de la boucle complémentaire 11, et équipé de moyens de transfert 15 pour faire passer un bac vers un emplacement 16, qui comporte des moyens de transfert (17, 18) pour envoyer le bac, soit vers la case 7₃, soit vers un emplacement semblable à celui 14 d'une seconde boucle complémentaire non représentée. Pour que les transferts puissent se faire correctement, il faut qu'à la fin de l'étape de prélèvement, les emplacements 14, 7₃, et 7ₙ soient libres. L'emplacement 7₃ constitue un emplacement d'accueil pour un bac venant d'une seconde boucle complémentaire.

Une boucle complémentaire comme celle de la figure 3, augmente la capacité de stockage du dispositif, et sa faculté de traiter un plus grand nombre de produits, de 2n-5, la boucle principale ayant une capacité de stockage de 2n-2. Cette augmentation de capacité n'allonge pas de façon prohibitive, la distance au point de prélèvement du point qui en est le plus éloigné. En effet, la distance la plus longue; pour cette installation à 2 boucles, est de n pas, contre (n- 1) pas pour une installation à une seule boucle. On peut ainsi mettre côte à côte autant de boucle complémentaires que l'on veut, tout en n'augmentant que d'une unité par boucle supplémentaire la distance maximale des bacs au poste de prélèvement, ce qui permet de garder à peu près le même temps d'initialisation du dispositif, et de ne scruter qu'une fraction relativement constante du portefeuille de commandes, qui peut être petite par rapport à la capacité de stockage du dispositif.

Si le bac C₃ présent à l'emplacement 6₃ doit atteindre le poste 1 avant le bac B₂, les étapes du cycle de transfert, après prélèvement dans le bac A₁ peuvent être, pour les bacs au voisinage des postes 1 et 2, ainsi que des emplacements 14 et 16 :
- 1^{ère} étape: A₁ »-»2; (A₂-Aᵢ)»-»(4₁-4ᵢ₋₁); B₂ »-»14; C₃ »-»5₃; D₃»»7₃
- 2^{ème} étape: A₁ stationnaire en 2; B₁ stationnaire en 5₁; B₂»-»16; Bᵢ»-»4ᵢ; C₃ stationnaire en 5₃; A₂»-»1; D₃»-»6₃; (A₃-Aᵢ) stationnaires en (4₂-4₍ᵢ₋₁₎)
- 3^{ème} étape : A₁ et B₁»-»5₁ et 5₂; A₂ stationnaire en 1; (A₃-Aᵢ) stationnaires en(4₂-4ᵢ₋₁); (C₃-Bᵢ₋₁)»-»(5₄-5ᵢ); Bᵢ stationnaire en 4ᵢ; D₃ stationnaire en 6₃; B₂ stationnaire en 16.
   Ce cycle peut bien entendu varier, et la boucle, accueillant B₂ et éjectant C₃ à la première étape, peut lors des deux autres étapes du cycle, ne faire qu'une rotation sur elle-même.

Avec d'autres boucles complémentaires en parallèle avec la boucle 11, le passage des bacs de boucle en boucle s'opère de la même manière. On peut, ainsi, pour un nombre d'articles donné, donc une aire déterminée, maîtriser le contour sensiblement rectangulaire de cette aire de stockage.

La figure 4 veut illustrer la facilité avec laquelle on peut dédoubler le dispositif selon l'invention. On s'est rendu compte, en effet que le temps de cycle moyen dépend, pour une grande part, du temps de prélèvement, et que les temps de transfert sont masqués par le temps de prélèvement. On augmentera donc le nombre de prélèvements, si on peut augmenter le nombre de points de prélèvement, puisqu'il n'est pas possible d'en réduire le temps. Avec le dispositif selon l'invention et le système informatique qui le pilote, il est possible de créer un poste de prélèvement (1 et 4ₙ) à l'extrémité de chaque boucle principale. Il suffit pour cela de diviser la boucle principale -avec, éventuellement, les boucles complémentaires qui y sont rattachées -en deux boucles 19A et 19B, ce, uniquement au niveau de l'unité de commande, de manière que cette unité de commande connaisse deux systèmes de boucles-files d'attente, qu'elle gère de manière séparée, en faisant un tri dans le portefeuille de commandes des articles concernés par une boucle, et ceux concernés par l'autre après avoir procédé à un repérage des bacs affectés à chaque boucle et à une initialisation des deux boucles. Ainsi une commande sera traitée en partie à l'un des postes, et achevée d'être confectionnée à l'autre poste. Les seuls aménagements à prévoir sont, d'une part, un transporteur reliant les deux postes fixes, et d'autre part, de laisser libres suffisamment d'emplacements (huit pour le cas d'une boucle simple comme celle de la figure 2) pour les transferts dans chacune des boucles. Bien entendu, les emplacements qui voient leur fonction changer par ce découpage, sont prééquipés des moyens de transfert avec les degrés de liberté de mouvement nécessaires pour pouvoir aussi assurer les transferts dans les nouvelles directions 5 (entrées, sorties,...).

A la figure 5, on a représenté une installation comportant deux ensembles 20A et 20B de boucles, dont le module de base de chacune est semblable à celui de la figure 3 (avec plusieures boucles complémentaires 11, 11A, 11B). Chaque ensemble est une superposition de trois modules de base. On retrouve sur cette figure les références de la figure 3, portée sur le module inférieur de l'ensemble 20A, à l'exception du poste de prélèvement qui est ici noté 21. Il est ainsi possible de réaliser un atelier de préparation de commandes à quatre postes possibles de prélèvement que l'on peut mettre totalement ou partiellement en service, selon la charge de travail. L'installation comprend ici deux ensembles 20A et 20B de boucles symétriques, chacun d'eux comportant trois dispositifs plans superposés. Les postes de prélèvement sont constitués par les emplacements 21 à 32. Ainsi, la totalité du prélèvement peut se faire aux postes 21 à 26. L'unité centrale de pilotage du dispositif ne connait q'une seule boucle à deux ensembles 20A et 20B. Si la demande est plus nombreuse, l'unité peut diviser l'installation en deux boucles séparées, qui possèderont, chacune leurs postes de prélèvement 21 à 23 pour l'une, 24 à 26 pour l'autre. Au cas ou la demande s'accroîtrait encore, par une division de l'ensemble 20A, on peut créer un lieu de prélèvement supplémentaire, auquel seraient affectés les postes 27 à 29, qui correspond à 4ₙ de la figure 4. Enfin une division de l'ensemble 20B permet de transformer les postes 30 à 32 en postes de prélèvement pour un quatrième opérateur.

L'invention autorise donc une bonne adaptation aux lignes de commandes qu'il faut traiter, et à leur variation. Elle est donc avantageusement applicable à une industrie qui connait une grande saisonnalité.

Elle souffre de nombreuses variantes, tant dans la réalisation que dans les domaines d'utilisation. C'est ainsi qu'en ce qui concerne la ligne 10 de réapprovisionnement de la boucle, celle-ci peut être une simple ligne d'accumulation, ou, au contraire, une ligne qui comporte elle même une boucle-file d'attente, permettant d'insérer des commandes urgentes à des instants jugés par l'informatique non critiques pour le déroulement global du processus.

Par ailleurs, on a décrit ci-dessus une installation dans laquelle les espaces libres sont, en fin de cycle, toujours situés au même endroit, ce qui n'est pas une obligation, au moins pour ce qui concerne l'emplacement 5n, situé à l'extrémité de la file de recyclage. Cet emplacement vide peut en effet être n'importe où, l'ordinateur le gérant de manière appropriée. Dans cette hypothèse, cependant, les moyens de transfert affectés à chaque emplacement devront tous permettre des mouvements orthogonaux, alors que dans la version décrite, les moyens de transfert peuvent être plus simples. En outre, on peut également prévoir que les communications entre boucles puissent s'effectuer à n'importe quel niveau, Cette possibilité est tout à fait compatible avec l'invention, mais présente l'inconvénient de compliquer les actionneurs devant assurer les transferts, et interdit un découplage simple d'un ensemble de boucles pour multiplier les postes fixes.

Les moyens de transfert peuvent être de toute nature. On mentionnera des chariots, motorisés ou non, qui constituent le support des bacs ou des conteneurs, circulant sur un bâti comportant les guides nécessaires aux chariots, et les emplacements de transfert. On mentionnera également la possibilité d'effectuer les transfert au moyen d'une structure supérieure, modulaire et motorisée, qui agirait comme poussoirs dans deux directions orthogonales, d'une amplitude égale au côté d'un emplacement, s'il est carré, pour des supports de bacs ou d'articles.

Les moyens de contrôle mis en oeuvre au poste de contrôle peuvent être d'une nature autre que pondérale; il peut s'agir de moyens optiques, de moyens de comptage..., suivant l'application réservée à l'invention.

Enfin, pour ce qui concerne les bacs eux mêmes et l'identification de leur contenu, on peut disposer de bacs identifiés une fois pour toutes, et affectés à un produit unique, ou au contraire, utiliser des bacs banalisés, et les personnaliser au moyen d'un code, avant leur entrée dans la boucle selon l'invention. Des dispositifs de lecture de ces codes permettraient de communiquer à l'unité centrale chaque position du bac au cours de son trajet.

Bien que l'exemple ci-dessus décrit concerne une installation de préparation de commandes, l'invention trouve une autre application importante dans le domaine du tri ou du groupage d'articles. On peut en effet sans difficultés transformer le poste de prélèvement en un poste où une succession continue d'articles parvient, dans un ordre arbitraire mais connu de l'unité informatique de traitement des informations, et dans les mêmes conditions que celles énoncées plus haut pour ce qui concerne le nombre d'articles différents que doit nécessairement connaître l'unité informatique. L'installation comprendrait alors des bacs ou des réceptacles spécialisés, par exemple pour recevoir un type de produit déterminé, qui se présentent successivement au poste 1 dans un ordre compatible avec l'ordre d'arrivée des produits, de manière que, comme dans le cas du prélèvement, ce soit le réceptacle approprié à recevoir le produit manipulé par l'opérateur( ou un robot ). Les bacs pleins, détectés au poste de contrôle, seraient alors évacués par le transporteur 9, tandis qu'un bac vide de même nature serait introduit dans la ligne de recyclage par le transporteur 10. Les cycles de fonctionnement de l'installation de groupage ou de tri qui résultent de cette application sont exactement les mêmes que ceux décrits ci-dessus.

Plus généralement, l'invention peut être utilisée chaque fois qu'un flux de produits ou d'objets doit subir une altération dans son organisation interne, dans son débit..., pour devenir un autre flux, propre à satisfaire des exigences différentes de celles qui ont présidé à l'établissement du flux initial.

On notera enfin une application particulièrement avantageuse de l'invention, qui découle de sa structure grâce au fait que le poste fixe où s'exprime la demande est nettement séparé du reste de l'installation. Il est alors très facile d'isoler ce poste, et le poste de contrôle, du reste de l'installation qui, elle, peut être enfermée dans une enceinte à atmosphère contrôlée (enceinte frigorifique, enceinte à atmosphère chaude, humide, nocive, soumise à rayonnements dangeureux...), ou d'enclore le poste lui même, pour soustraire l'opérateur à une atmosphère ambiante néfaste. Il suffit en effet de disposer entre les postes 1 et 4₁ et 2 et 5₁ un dispositif de sas approprié qui maitienne une étanchéité suffisante entre l'enceinte et le milieu extérieur où peut séjourner sans danger l'opérateur.

## Revendications

1. Procédé d'accumulation et de convoyage d'articles pour présenter successivement à un poste fixe ceux de ces articles qui satisfont à une demande ordonnée arbitrairement dans l'ordre de cette demande, caractérisé en ce qu'il consiste à :
- organiser l'ensemble des articles (Aᵢ, Bᵢ) à accumuler et à présenter au poste fixe en au moins une boucle-file d'attente comportant:
- une ligne amont où sont prévus un emplacement (1) constituant le poste fixe, et une file (4) d'emplacements pour l'acheminement pas à pas des articles vers le poste fixe,
- une ligne aval où sont prévus un emplacement (2) de contrôle adjacent au poste fixe (1), et une file (5) d'emplacements adjacente à la file d'acheminement (4), pour le recyclage des articles, comportant le même nombre d'emplacements que la file d'acheminement et issue du poste de contrôle (2)
en réservant au moins un emplacement libre (4₁) sur la ligne amont, y compris le poste fixe, et au moins deux emplacements libres (2, 5ₙ) sur la ligne aval, y compris le poste de contrôle,
- connaître en permanence, au moyen d'une unité de traitement de données, la fraction de la demande ordonnée portant sur un nombre d'articles différents égal à la totalité des emplacements de la file d'acheminement, et agencer les articles dans la file d'acheminement, dans l'ordre de la fraction de demande connue, de manière continue, pas à pas, au moyen de ladite unité centrale associée à des moyens de transfert (3, 6, 7, 8) des articles d'un emplacement à un emplacement adjacent, de manière qu'à la fin de chaque pas, le poste fixe (1) soit adjacent à un espacement laissé libre de la file d'acheminement, que le poste de contrôle (2) ainsi qu'un emplacement de la ligne de recyclage (5) soient libres.

2. Procédé selon la revendication 1, caractérisé en ce que chaque pas d'amenée et de traitement d'un article au poste fixe comporte trois étapes :
- un transfert de la position d'attente de l'article dans l'emplacement libre (4₁) en amont du poste fixe (1),
- un transfert de l'article depuis cet emplacement (4₁) vers le poste fixe (1),
- un temps de stationnement permettant le traitement de l'article par l'opérateur.

3. Procédé selon la revendication 2, caractérisé en ce que la position d'attente de l'article est constituée par l'avant-dernier emplacement (4₂) de la file d'acheminement (4), ou par le premier emplacement (5₁) de la file de recyclage (5).

4. Procédé selon l'une des revendications précédentes caractérisé en ce qu'il consiste, lorsque le nombre des articles est supérieur à l'ensemble des emplacements non libres d'une première boucle-file d'attente,
- à disposer les articles supplémentaires sur au moins une boucle-file d'attente complémentaire (11) comportant une ligne amont avec :
. une file d'acheminement adjacente à la file (5) de recyclage de la boucle principale se terminant par un emplacement (6₃) de transfert de l'article vers l'emplacement (5₃) adjacent de la file de recyclage de la boucle principale,
. et un emplacement d'accueil (14) d'un article en provenance de l'emplacement adjacent (5₂) de la ligne de recyclage de la boucle principale , l'emplacement d'accueil (14) formant également emplacement de transfert en direction de la ligne de recyclage de la boucle complémentaire,
cette ligne de recyclage comprenant :
. une file de recyclage adjacente à la file d'acheminement,
. et un emplacement d'extrémité (16) adjacent à l'emplacement d'accueil (14) formant emplacement de transfert de l'article vers un emplacement d'accueil d'une seconde boucle complémentaire adjacente, ou vers le premier emplacement de la file de recyclage.
- à connaître en permanence, au moyen d'une unité de traitement de données, la fraction de la demande ordonnée portant sur un nombre d'article différents égal à la totalité des emplacements de la file d'acheminement de la boucle principale augmenté d'une unité par boucle complémentaire et agencer les articles dans chaque file d'acheminement, dans l'ordre de la fraction de demande connue, de manière continue, pas à pas, au moyen de ladite unité centrale associée à des moyens de transfert (3? 6, 7, 8, 12, 13, 15, 17, 18) des articles d'un emplacement à un emplacement adjacent, de manière qu'à la fin de chaque pas, outre les emplacements libres susdits, l'emplacement d'accueil (14) et le premier emplacement (7₃) de la file de recyclage de chaque boucle complémentaire de même que le dernier emplacement (7ₙ) de la ligne aval de chaque boucle complémentaire et que l'emplacement (5₃) de la file de recyclage (5) de la boucle principale adjacent au premier emplacement de la file d'acheminement de la boucle complémentaire voisine, soient également maintenus libres.

5. Dispositif pour mettre en oeuvre le procédé selon l'une quelconque des revendications précédentes comprenant un bâti présentant une pluralité d'emplacements (4ᵢ, 5ᵢ) pour recevoir les articles (Aᵢ, Bᵢ) et des moyens de transfert (3, 6, 7, 8, 12, 13, 15, 17, 18) pour agir sur les articles, caractérisé en ce que la totalité des emplacements (4ᵢ, 5ᵢ) sont arrangés en au moins une boucle-file d'attente comportant une ligne amont et une ligne aval d'égale longueur terminées respectivement par un poste fixe (1) et un poste de contrôle (2), les moyens de transfert (6, 7, 8) comportant des moyens de déplacement unidirectionnel pas à pas des articles de chaque emplacement de la boucle vers l'emplacement adjacent aval et de chaque emplacement de la file (5) comprenant le poste de contrôle (2) vers un emplacement de la file (4) comprenant le poste fixe (1).

6. Dispositif selon la revendication 5, caractérisé en ce que chaque article est constitué par un support mobile pour un nombre préétabli de pièces identifiées.

7. Dispositif selon la revendication 6, caractérisé en ce que le poste fixe étant un poste de prélèvement, le poste de contrôle comprend un organe de détection du nombre de pièces prélevées.

8. Dispositif selon la revendication 7, caractérisé en ce qu'il comporte un moyen d'évacuation (9) de chaque support mobile vide hors de la boucle au niveau du poste de contrôle (2), et un moyen d'introduction (10) dans la boucle d'un support rempli, à l'emplacement (5ᵢ) de la file de recyclage (5), adjacent au poste de contrôle, un emplacement supplémentaire (5₃) de la file de recyclage étant maintenu vide à la fin de chaque opération de prélèvement, en aval de l'emplacement d'introduction (5₂).

9. Dispositif selon l'une quelconque des revendications 5 à 8, caractérisé en ce qu'il comporte au moins une boucle-file d'attente complémentaire (11) dont la ligne amont comporte :
- une file d'acheminement adjacente à la file aval (5) de la boucle principale, se terminant par un emplacement (6₃) équipé de moyens de transfert (12) de l'article vers l'emplacement (5₃) adjacent de la file aval de la boucle principale,
- et un emplacement d'accueil (14) d'un article en provenance de l'emplacement adjacent (5₂) de la ligne aval de la boucle principale équipé de moyens de transfert (13) correspondants, l'emplacement d'accueil (14) comportant également des moyens de transfert (15) en direction de la ligne aval de la boucle complémentaire
et dont ladite ligne aval comporte :
- une file de recyclage adjacente à la file d'acheminement,
- et un emplacement d'extrémité (16) adjacent à l'emplacement d'accueil (14), équipé de moyens de transfert (17, 18) de l'article vers un emplacement d'accueil d'une seconde boucle complémentaire adjacente, ou vers le premier emplacement de la file de recyclage.

## Claims

1. A method of accumulating and conveying articles for successively presenting a stationary position with those of said articles that satisfy a request in arbitrary order, the articles being presented in the order of said request, the method being characterized in that it consists in ;
- organizing the set of articles (Ai, Bi) to be accumulated and to be conveyed towards the stationary position in at least one queue-loop comprising :
. an upstream line in which there are provided an emplacement (1) constituting the stationary position and a queue (4) of emplacements for delivering articles step by step towards the stationary position :
. a downstream line in which there are provided a checking emplacement (2) adjacent to the stationary position (1) and a queue (5) of emplacements adjacent to the delivery queue (4) and serving to recycle articles, said queue having the same number of emplacements as the delivery queue and running from the checking position (2); while reserving at least one free emplacement (4,) on the upstream line, including the stationary position, and at least two free emplacements (2, 5ₙ) on the downstream line, including the checking position ; and
- using a data processing unit to keep permanent track of the fraction of the ordered request relating to a number of different articles equal to the total quantity of emplacements in the delivery queue, and disposing the articles in the delivery queue on a continuous basis, and step by step in the order specified by the known fraction of the request, by means of said central unit associated with article transfer means (3, 6, 7, 8) for transferring articles from one emplacement to an adjacent emplacement in such a manner that, at the end of each step, the stationary position (1) is adjacent to an emplacement of the delivery queue that is left free, and that the checking position, and one emplacement of the recycling line (5) are left free.

2. A method according to claim 1, characterized in that each step during which an article is moved towards the stationary position and is processed, itself comprises three sub-steps :
- the article is transferred from a waiting position into the free emplacement (4₁) upstream from the stationary position (1) ;
- the article is transferred from said emplacement (4₁) to the stationary position (1) ; and
- the article is left stationary for a length of time which is sufficient to enable an operator to process it.

3. A method according to claim 2, characterized in that the waiting position of the article is constituted by the penultimate emplacement (4₂) of the delivery queue (4) or by the first emplacement (5₁) of the recycling queue (5).

4. A method according to any one of the preceding claims characterized in that, when the number of articles is more than the set of emplacements which are not left free in a first queue-loop, it consists in :
- disposing supplementary articles on at least one additional queue-loop (11) whose upstream line comprises :
. a delivery queue adjacent to the downstream queue (5) of the main loop and terminated by an emplacement (6₃) used for transferring the article towards the adjacent emplacement (5₃) of the downstream queue of the main loop; and
. a reception emplacement (14) for receiving an article from the adjacent emplacement (5₂) of the downstream queue of the main loop, the reception emplacement (14) being also a transfer emplacement towards the downstream line of the additional loop ;
said downstream line comprises :
. a recycling queue adjacent to the delivery queue; and
. an end emplacement (16) adjacent to the reception emplacement (14) for transferring an article towards a reception emplacement of an adjacent second additional loop, or else towards the first emplacement of the recycling queue ;
- using a data processing unit to keep permanent track of the fraction of the ordered request relating to a number of different articles equal to sum of the total number of the emplacements in the delivery queue of the main queue-loop and the number of additional queue-loops and disposing the articles in each delivery queue on a continuous basis, and step by step in the order specified by the known fraction of the request, by means of said central unit associated with article transfer means (3, 6, 7, 8, 12, 13, 15, 17, 18) for transferring articles from one emplacement to an adjacent emplacement in such a manner that, at the end of each step, in addition to said emplacements which are kept free, the reception emplacement (14) and the first emplacement (7₃) of the recycling queue of each additional queue-loop, as well as the last emplacement (7ₙ) of the downstream line of each additional queue-loop and as the emplacement (5₃) of the recycling queue (5) of the main queue-loop adjacent to the first emplacement of the delivery queue of the adjacent additional queue-loop are also kept free.

5. Apparatus for carrying out the method according to any one of the preceding claims including :
a frame having a plurality of emplacements (4ᵢ, 5ᵢ) for receiving the articles (Aᵢ, Bᵢ) and transfer means (3, 6, 7, 8, 12, 13, 15, 17, 18) for acting on the articles, characterized in that the emplacements (4ᵢ, 5ᵢ) are disposed on at least one queue-loop having an upstream line and a downstream line of equal length, respectively provided at their end by a stationary position (1) and a checking position (2) ;
said transfer means (6, 7, 8) having unidirectional driving means, to move articles step by step from one emplacement of the loop to a downstream adjacent emplacement, and from an emplacement in the queue (5) with the checking station (2) to an emplacement in the queue (4) with said stationary station (1).

6. Apparatus according to claim 5, characterized in that each article is constituted by a moving support for a pre-established number of identified parts.

7. Apparatus according to claim 6, characterized in that the stationary position is a position from which items are taken, and the checking station includes a member for detecting the number of parts taken.

8. Apparatus according to claim 7, characterized in that it includes means (9) at the checking position (2) for removing each empty moving support from the loop, and means (10) at the emplacement (5₁) of the recycling queue (5) and adjacent to the checking station for inserting a full support into the loop, an additional emplacement (5₃) of the recycling queue being kept free at the end of each item-taking operation downstream the insertion emplacement (5₂).

9. Apparatus according to any one of claims 5 to 9, characterized in that it includes at least one additional queue-loop (11) whose upstream line comprises :
- a delivery queue adjacent to the downstream queue (5) of the main loop and terminated by an emplacement (6₃) fitted with transfer means (12) for transferring an article to the adjacent emplacement (5₃) of the downstream queue of the main loop; and
- a reception emplacement (14) for receiving an article from the adjacent emplacement (5₂) of the downstream line of the main loop which is fitted with appropriate transfer means (13), the reception emplacement (14) also including transfer means (15) towards the downstream line of the additional loop ;
and in which the downstream line comprises :
- a recycling queue adjacent to the delivery queue; and
- an end emplacement (16) adjacent to the reception emplacement (14) and fitted with transfer means (17, 18) for transferring an article to a reception emplacement of an adjacent second additional loop, or else towards the first emplacement of the recycling queue.

## Patentansprüche

1. Verfahren zur Ansammlung und zur Beförderung von Gegenständen, um diejenigen der Gegenstände, die einem willkürlich erfolgten Abruf entsprechen, in der Reihenfolge dieses Abrufs an einer ortsfesten Station anzuliefern, dadurch gekennzeichnet,
- daß die gesamten Gegenstände (Aᵢ,Bᵢ), die anzusammeln und an der ortsfesten Station anzuliefern sind, in zumindest einer Warteschleife angeordnet werden, die
eine stromaufwärtige Bahn mit einer die ortsfeste Station bildenden Stelle (1) und mit einer Reihe (4) von Stellen für die schrittweise Beförderung der Gegenstände zur ortsfesten Station
und eine stromabwärtige Bahn mit einer an die ortsfeste Station (1) angrenzenden Kontrollstation (2) und mit einer an die Förderreihe (4) angrenzenden Reihe (5) von Stellen für die Rückführung der Gegenstände umfaßt, die dieselbe Anzahl von Stellen wie die Förderreihe hat und von der Kontrollstation (2) abführt,
wobei zumindest eine freie Stelle (4₁) an der die ortsfeste Station einschließenden stromaufwärtigen Bahn und zumindest zwei freie Stellen (2, 5ₙ), einschließlich der Kontrollstation, der stromabwärtigen Bahn reserviert werden,
- daß mit Hilfe einer Datenverarbeitungseinheit fortlaufend der Anteil der abgerufenen Menge ermittelt wird, der der Anzahl von verschiedenen Gegenständen entspricht, die gleich der Gesamtzahl der Stellen der Förderreihe ist, und daß die Gegenstände in der Reihenfolge des ermittelten Anteils der Abrufmenge mit Hilfe der genannten Zentraleinheit, die Einrichtungen (3,6,7,8) für den Transfer der Gegenstände von einer Stelle in der Förderreihe zu einer benachbarten Stelle zugeordnet ist, kontinuierlich schrittweise in der Förderreihe angeordnet werden, derart, daß am Ende eines jeden Schrittes die ortsfeste Station (1) einer freigelassenen Stelle der Förderreihe benachbart ist und daß die Kontrollstation (2) sowie eine Stelle der Rückführungsbahn (5) frei sind.

2. Verfahren nach Anspruch 1, dadurch gekennzeichnet, daß jeder Schritt der Zufuhr und der Bearbeitung eines Gegenstands an der ortsfesten Station drei Etappen umfaßt:
- einen Transfer des Gegenstands von der Warteposition zur freien Stelle (4₁) stromaufwärts der ortsfesten Station (1),
- einen Transfer des Gegenstands von dieser Stelle (4₁) zur ortsfesten Station (1),
- eine Verweildauer, die die Bearbeitung des Gegenstands durch den Bediener erlaubt.

3. Verfahren nach Anspruch 2, dadurch gekennzeichnet, daß die Warteposition des Gegenstands durch die vorletzte Stelle (4₂) der Förderreihe (4) oder durch die erste Stelle (5₁) der Rückführungsreihe (5) gebildet wird.

4. Verfahren nach einem der vorhergehenden Ansprüche, dadurch gekennzeichnet, daß dieses, wenn die Anzahl der Gegenstände größer ist als die Gesamtheit der nicht freien Stellen einer ersten Warteschleife, die folgenden Schritte umfaßt:
- Anordnen der zusätzlichen Gegenstände in zumindest einer ergänzenden Warteschleife (11) mit einer stromaufwärtigen Bahn, die
eine an die Rückführungsreihe (5) der Hauptschleife angrenzende Förderreihe, die mit einer Stelle (6₃) für den Transfer des Gegenstands zur benachbarten Stelle (5₃) der Rückführungsreihe der Hauptschleife endet,
und eine Stelle (14) für die Aufnahme eines von der benachbarten Stelle (5₂) der Rückführungsbahn der Hauptschleife kommenden Gegenstands hat, wobei die Aufnahmestelle (14) auch eine Stelle für den Transfer in Richtung der Rückführungbahn der ergänzenden Schleife bildet,
wobei die Rückführungsbahn
eine an die Förderreihe angrenzende Rückführungsreihe und eine an die Aufnahmestelle (14) angrenzende Endstelle (16) umfaßt, die eine Stelle für den Transfer des Gegenstands zu einer Aufnahmestelle einer benachbarten zweiten komplementären Schleife oder zur ersten Stelle der Rückführungsreihe bildet,
- laufende Ermittlung des Anteils der Abrufmenge, welcher der durch eine ergänzende Schleife um eine Einheit vergrößerten Anzahl verschiedener Gegenstände entspricht, die gleich der Gesamtmenge der Stellen der Förderreihe der Hauptschleife ist, mit Hilfe einer Datenverarbeitungseinheit und kontinuierlich schrittweises Anordnen der Gegenstände in der Reihenfolge des ermittelten Anteils der Abrufmenge in jeder Förderreihe mit Hilfe der genannten Zentraleinheit, die einer Einrichtung (3,6,7,8,12,13,15,17,18) für den Transfer der Gegenstände von einer Stelle zu einer benachbarten Stelle zugeordnet ist, derart, daß am Ende eines jeden Schrittes außer den vorgenannten freien Stellen auch die Aufnahmestelle (14) und die erste Stelle (7₃) der Rückführungsreihe jeder ergänzenden Schleife ebenso wie die letzte Stelle (7ₙ) der stromabwärtigen Bahn jeder ergänzenden Schleife und wie die an die erste Stelle der Förderreihe der benachbarten ergänzenden Schleife angrenzende Stelle (5₃) der Rückführungsreihe (5) der Hauptschleife freigehalten werden.

5. Vorrichtung zur Durchführung des Verfahrens nach einem der vorhergehenden Ansprüche, die einen Rahmen mit einer Vielzahl von Stellen (4ᵢ,5ᵢ) zur Aufnahme der Gegenstände (Aᵢ,Bᵢ) und auf diese Gegenstände einwirkende Transfereinrichtungen (3,6,7,8,12,13,15,17,18) hat, dadurch gekennzeichnet, daß die gesamten Stellen (4ᵢ,5ᵢ) in zumindest einer Warteschleife angeordnet sind, die eine stromaufwärtige Bahn und eine stromabwärtige Bahn enthält, die gleiche Länge haben und in einer ortsfesten Station (1) bzw. einer Kontrollstation (2) enden, wobei die Transfereinrichtungen (6,7,8) Mittel umfassen für die in einer Richtung erfolgende schrittweise Bewegung der Gegenstände von jeder Stelle der Schleife zu der stromaufwärts benachbarten Stelle und von jeder Stelle der die Kontrollstation (2) enthaltenden Reihe (5) zu einer Stelle der die ortsfeste Station enthaltenden Reihe (4).

6. Vorrichtung nach Anspruch 5, dadurch gekennzeichnet, daß jeder Gegenstand durch einen mobilen Träger für eine vorbestimmte Anzahl von gekennzeichneten Teilen gebildet ist.

7. Vorrichtung nach Anspruch 6, dadurch gekennzeichnet, daß die ortsfeste Station eine Entnahmestation ist und daß die Kontrollstation ein Organ für den Nachweis der Anzahl entnommener Teile enthält.

8. Vorrichtung nach Anspruch 7, gekennzeichnet durch eine Einrichtung (9) zum Herausnehmen jedes leeren mobilen Trägers aus der Schleife in Höhe der Kontrollstation (2) und eine Einrichtung (10) zum Einführen eines gefüllten Trägers in die Schleife an der an die Kontrollstation angrenzenden Stelle (5ᵢ) der Rückführungsreihe (5), wobei am Ende eines jeden Entnahmevorgangs stromabwärts der Einführstelle (5₂) eine zusätzliche Stelle (5₃) der Rückführungsreihe leer gehalten wird.

9. Vorrichtung nach einem der Ansprüche 5 bis 8, gekennzeichnet durch zumindest eine ergänzende Warteschleife (11), deren stromaufwärtige Bahn
- eine an die stromabwärtige Reihe (5) der Hauptschleife angrenzende Förderreihe, die mit einer Stelle (6₃) endet, die mit Einrichtungen (12) für den Transfer des Gegenstands zur benachbarten Stelle (5₃) der stromabwärtigen Reihe der Hauptschleife versehen ist,
- und eine Stelle (14) für die Aufnahme eines von der benachbarten Stelle (5₂) der stromabwärtigen Bahn der Hauptschleife kommenden Gegenstands umfaßt, die mit entsprechenden Transfereinrichtungen (13) versehen ist und wobei die Aufnahmestelle (14) ebenfalls mit Transfereinrichtungen (15) für einen Transfer in Richtung der stromabwärtigen Bahn der ergänzenden Schleife versehen ist,
und deren stromabwärtige Bahn
- eine an die Förderreihe angrenzende Rückführungsreihe
- und eine an die Aufnahmestelle (14) angrenzende Endstelle (16) umfaßt, die mit einer Einrichtung (17,18) für den Transfer des Gegenstands zu einer Aufnahmestelle einer benachbarten zweiten Ergänzungsschleife oder zur ersten Stelle der Rückführungsreihe versehen ist.
